# EUROPÄISCHE PATENTSCHRIFT

(11) **EP 2 981 491 B1**
(45) Veröffentlichungstag und Bekanntmachung des Hinweises auf die Patenterteilung: **07.03.2018**
(21) Anmeldenummer: 14710505.0
(22) Anmeldetag: 14.03.2014
(51) Int. Cl.: B65G 47/84, B67C 3/24

(54) **BEHÄLTERBEHANDLUNGSMASCHINE SOWIE VERFAHREN ZUM ZU- UND/ODER ABFÜHREN VON BEHÄLTERN ZU EINER BEHÄLTERBEHANDLUNGSMASCHINE**
CONTAINER PROCESSING MACHINE AND METHOD FOR DELIVERING CONTAINERS TO AND/OR REMOVING THEM FROM A CONTAINER PROCESSING MACHINE
MACHINE DE TRAITEMENT DE CONTENANT ET PROCÉDÉ D'AMENÉE ET/OU D'ÉVACUATION DE CONTENANTS À UNE MACHINE DE TRAITEMENT DE CONTENANT

(30) Priorität: 03.04.2013 DE 102013103309
(43) Veröffentlichungstag der Anmeldung: 10.02.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/000708
(87) Internationale Veröffentlichungsnummer: WO 2014/161635

(56) Entgegenhaltungen:
- EP-A1- 0 486 439
- WO-A1-95/29860
- DE-A1- 3 133 341
- DE-A1- 10 325 693
- DE-A1-102006 017 706
- DE-U1- 9 017 262

## Beschreibung

Die Erfindung bezieht sich auf eine Behälterbehandlungsmaschine gemäß Patentanspruch 1 sowie ein Verfahren zum Zu- und/oder Abführen von Behältern zu/von einer Behälterbehandlungsmaschine gemäß Patentanspruch 15. Behälterbehandlungsmaschinen, insbesondere solche umlaufender Bauart, bei denen ein um eine vertikale Maschinenachse rotierend angetriebenes Transportelement vorgesehen ist, sind hinlänglich bekannt. Derartige Behälterbehandlungsmaschinen werden über einen Einlaufstern teilungsgerecht zu behandelnde Behälter zugeführt und über einen Auslaufstern bereits behandelte Behälter abgeführt.

Aus der Druckschrift DE 10 2011 079 078 A1 ist eine Einsternzuführung für Behandlungsmaschinen bekannt geworden, bei der an einem Zuführ-und Entnahmestern zwei Greiferelemente vorgesehen sind, mittels denen eine Zuführung bzw. Abführung der Behälter zu/von einer Behälterbehandlungsmaschine bewirkt wird.

Die Druckschrift DE 103 25 693 A1 offenbart eine Streckblasmaschine umlaufender Bauart mit einer Transfervorrichtung, mittels der die Zuführung von Preformen zu der Streckblasmaschine und die Abführung der durch den Blasvorgang erhaltenen Flaschen bewirkt wird.

Ferner offenbaren die gattungsgemäße DE 31 33 341 A1, sowie EP 2 412 651 A1 und DE 38 13 250 A1 Behälterbehandlungsmaschinen mit Übergabeeinrichtungen zur Zuführung von zu behandelnden Behältern und zur Abführung von behandelten Behältern.

Nachteilig am aufgezeigten Stand der Technik ist, dass die bekannte Einsternzuführung technisch äußerst aufwändig und darüber hinaus störanfällig ist. Ausgehend hiervon ist es Aufgabe der Erfindung, eine Behälterbehandlungsmaschine anzugeben, die konstruktiv einfach ausgebildet und damit neben einer kostengünstigen Herstellung störungsunempfindlich ist.

Die Aufgabe wird ausgehend vom Oberbegriff des unabhängigen Patentanspruchs 1 durch dessen kennzeichnende Merkmale gelöst. Ein Verfahren zum Zu- und/oder Abführen von Behältern zu/von einer Behälterbehandlungsmaschine ist Gegenstand des unabhängigen Patentanspruchs 14. Der wesentliche Aspekt der erfindungsgemäßen Behälterbehandlungsmaschine umfassend ein um eine vertikale Maschinenachse umlaufendes Transportelement mit einer Vielzahl von Behandlungsstationen zum Behandeln von Behältern und einem einzigen Transferstern, mittels dem ein Zuführen der zu behandelnden Behälter zum Transportelement und ein Abführen der bereits behandelten Behälter vom Transportelement erfolgt, besteht darin, dass der Transferstern umfangsseitig angeordnete Ausnehmungen aufweist, in die die Behälter zur Zuführung und Abführung zumindest teilweise aufgenommen sind. Damit wird in äußerst einfacher und damit störunanfälliger Weise das Zuführen bzw. Abführen der Behälter bewirkt. Die Ausnehmungen können beispielsweise durch teilkreisförmige Ausschnitte in einem im Übrigen kreisförmig ausgebildeten Transferstern gebildet sein. Die zu behandelnden Behälter können dabei durch einen äußeren Transporteur in die eine Behälteraufnahme bildende Ausnehmung eingefördert und durch Drehung des Transfersterns um eine weitere, zur Maschinenachse des Transportelements parallele Maschinenachse dem Transportelement der Behandlungsmaschine in einer Teilkreisbahn zugeführt werden.

In einem bevorzugten Ausführungsbeispiel erfolgt die Zuführung bzw. Abführung der Behälter durch den Transferstern in einer ersten Höhenebene und die Behandlung der Behälter an den Behandlungsstationen in einer zweiten, oberhalb der ersten Höhenebene liegenden Höhenebene. Bei der Zuführung von zu behandelnden Behältern zu dem Transportelement der Behälterbehandlungsmaschine und der Abführung von bereits behandelten Behältern von dem Transportelement der Behälterbehandlungsmaschine durch einen einzigen Transferstern ist es vorteilhaft, nach der Abgabe eines zu behandelnden Behälters an eine erste Behandlungsstation, durch die (Abgabe) eine freie Behälteraufnahme an dem Transferstern geschaffen wird, in eben diese freie Behälteraufnahme einen bereits behandelten Behälter einzubringen. Durch die höhenversetzte Anordnung der Zuführungsebene und der Behandlungsebene wird es möglich, einen Bewegungsraum zu schaffen, so dass ein zu behandelnder Behälter aus einer Behälteraufnahme entnommen und ein bereits behandelter Behälter in die freigewordene Behälteraufnahme eingebracht werden kann. Durch die höhenversetzte Anordnung der Zuführebene bzw. der Behandlungsebene ist es ferner insbesondere möglich, dass die kreisförmigen Bewegungsbahnen der Behälter im Transferstern und im Transportelement sich in einem tangentialen Berührpunkt berühren, d.h. die Kreisbahnen, auf denen sich die Behälter im Transferstern und im Transportelement bewegen, weisen eine gemeinsame Tangente auf.

Das Vorhandensein von auf unterschiedlichen Höhenebenen angeordneten befindlichen Zuführungs- und Behandlungsebenen ist jedoch nicht zwingend. Insbesondere bei freistehenden, also nicht auf einen Puck angewiesenen Behältern und/oder bei Behälterbehandlungen, die nicht auf einen, in Dichtlage mit der Behandlungsvorrichtung befindlichen Behälter angewiesen sind, beispielsweise einer Freistrahlfüllung kann auf unterschiedliche Höhenebenen verzichtet werden. Die Zu- und Abfuhr der Behälter durch den Transferstern, erfolgt dabei vorzugsweise durch eine geschickte Steuerung der Drehbewegungen und auch der Drehrichtungen des Transportelementes der Behälterbehandlungsmaschine und auch des einzigen Transfersterns.

Besonders bevorzugt sind allerdings am Transportelement den Behandlungsstationen zugeordnete Hubeinrichtungen vorgesehen, die zum Anheben der Behälter von der ersten Höhenebene in die zweite Höhenebene und zum Absenken der Behälter von der zweiten Höhenebene in die erste Höhenebene ausgebildet sind. Durch das Anheben eines zu behandelnden Behälters durch die Hubeinrichtung wird der durch die höhenversetzte Anordnung der Zuführungsebene und der Behandlungsebene geschaffene Raum genutzt, um nach der Entnahme eines Behälters aus der Behälteraufnahme des Transfersterns kollisionsfrei das Transportelement um eine Maschinenteilung getaktet weiterzudrehen, so dass die nächste Behandlungsstation oberhalb der freigewordenen Behälteraufnahme zu liegen kommt und der dort befindliche, bereits behandelte Behälter durch Absenken der Hubeinrichtung der Behälteraufnahme zugeführt werden kann. Dadurch wird eine einfache und störungsfreie Zuführung bzw. Abführung der Behälter erreicht.

In einem bevorzugten Ausführungsbeispiel ist jeder Behandlungsstation des Transportelements jeweils eine eigenständige Hubvorrichtung zugeordnet. Vorzugsweise ist diese Hubvorrichtung Bestandteil des Transportelements und wird damit zusammen mit den Behältern bei Drehung des Transportelements mitgeführt. Vorzugsweise kann diese Hubvorrichtung zur Halterung der Behälter an den jeweiligen Behandlungsstationen, insbesondere zu einem in vertikaler Richtung bewirkten Anpressen der Behälter an die Behandlungsstation, beispielsweise beim Füllen der Behälter mit einem flüssigen Füllgut, verwendet werden. Erfindungsgemäß sind das Transportelement und der Transferstern unabhängig voneinander antreibbar ausgebildet. Dadurch kann bewirkt werden, dass beispielsweise nach einer Entnahme eines Behälters aus einer Behälteraufnahme des Transfersterns der Transferstern selbst stehen bleibt, wohingegen das Transportelement eine Drehung um einen einer Maschinenteilung entsprechenden Winkelbetrag vornimmt, so dass der an der nächstfolgenden Behandlungsstation befindliche Behälter in die durch die Entnahme freigewordene Behälteraufnahme eingebracht werden kann. Ferner lässt sich durch die unabhängige Antreibbarkeit des Transportelements bzw. des Transfersterns ein optimierter Gesamtbetrieb der Behälterbehandlungsmaschine erreichen.

Besonders bevorzugt sind das Transportelement und der Transferstern zumindest teilweise wechselseitig getaktet oder intermittierend antreibbar ausgebildet. Durch diese wechselseitige Taktung lässt sich erreichen, dass beispielsweise der Transferstern bei stillstehendem Transportelement oder in umgekehrter Weise das Transportelement bei stillstehendem Transferstern um einen Winkelbetrag Betrag gedreht wird, um eine getaktete Zuführung bzw. Abführung der Behälter zu erreichen. Ebenso werden durch den getakteten Antrieb gleichzeitige Stillstandphasen des Transportelements und des Transfersterns erreicht, die beispielsweise zur Übergabe des Behälters vom Transferstern an die Behandlungsstation des Transportelements genutzt werden.

In einem bevorzugten Ausführungsbeispiel sind das Transportelement und/oder der Transferstern in unterschiedliche Drehrichtungen antreibbar ausgebildet, d.h. das Transportelement und/oder der Transferstern können ihre Drehrichtung ändern. Dadurch ist beispielsweise ein verbessertes Einfädeln von an der Hubeinrichtung vorgesehenen Haltemitteln an den Behältern oder auch ein Nachjustieren der Stellung des Transportelements und/oder des Transfersterns möglich.

Bevorzugt weist die Hubeinrichtung Haltemittel auf, die zum zumindest teilweisen seitlichen Umgreifen des Behälters ausgebildet sind. Mittels dieser Haltemittel kann insbesondere der Behälter im Bereich seines Behälterhalses zumindest teilweise umgriffen und damit durch die Hubeinrichtung in vertikaler Richtung angehoben werden. Vorzugsweise sind die Haltemittel aus einem einzigen Halteelement mit einer an den Behälterhals angepassten Ausnehmung gebildet, um damit den Behälterhals unterhalb einer Verdickung oder Vorsprungs des Behälterhalses zumindest teilweise zu umgreifen.

In einem bevorzugten Ausführungsbeispiel werden die Haltemittel durch einen Greifer gebildet, der zumindest zwei miteinander zusammenwirkende Greiferelemente aufweist, die derart bewegbar sind, dass der Einlauf eines zu behandelnden Behälters bzw. der Auslauf eines bereits behandelten Behälters behinderungsfrei erfolgt. Mittels derartiger Greifer lässt sich ein Behälter zangenartig umgreifen, so dass ein sicherer Halt des Behälters an der Hubeinrichtung ermöglicht wird.

Besonders bevorzugt weißt die Hubeinrichtung als Neckringhalter ausgebildete Haltemittel auf, die zum teilweisen seitlichen Umgreifen eines Behälters unterhalb des am Behälterhals vorgesehenen Neckrings ausgebildet sind. Der Neckringhalter weist insbesondere eine teilkreisförmige Ausnehmung auf, die an die Abmessungen des Behälterhalses unterhalb des Neckrings angepasst sind. Dadurch lässt sich eine einfache Halterung des Behälters an der Hubeinrichtung erreichen, mittels der auch ein Anpressdruck an der Behandlungsstation, beispielsweise beim Füllen des Behälters bewirkt werden kann.

In einem bevorzugten Ausführungsbeispiel ist das Transportelement zur getakteten Drehung um einen Winkelbetrag entgegen der Drehrichtung des gleichzeitig gedrehten Transfersterns ausgebildet ist, um ein kollisionsfreies teilweises Umgreifen des Behälters durch die Haltemittel zu ermöglichen. Dabei kann insbesondere ein Einfädeln des Behälters in eine Ausnehmung der Haltemittel erreicht werden. Insbesondere kann das Transportelement zunächst ausgehend von einer Ausgangsposition, bei der sich eine Behandlungsstation an der Übergabeposition zwischen Transportelement und Transferstern befindet, um einen Winkelbetrag in Drehrichtung des Transfersterns gedreht werden, um damit eine Ausrichtung der Ausnehmung der Haltemittel in Richtung des einlaufenden, vom Transferstern geförderten Behälters vorzunehmen. Anschließend erfolgt ein Wechsel der Drehrichtung des Transportelements, so dass das Transportelement entgegen der Drehrichtung des Transfersterns gleichzeitig mit diesem auf die Übergabeposition zubewegt wird. Dadurch lässt sich ein kollisionsfreies Umgreifen des Behälters mit den Haltemitteln der Hubeinrichtung bewirken.

Alternativ ist es auch möglich, die Haltemittel selbst um eine vertikale, parallel zur Maschinenachse des Transportelements verlaufende Hochachse verschwenkbar auszubilden. Vorzugsweise werden die Haltemittel mit ihrer Ausnehmung derart ausgehend von einer radialen Ausrichtung in Bezug auf die erste Maschinenachse des Transportelements verschwenkt, dass die Ausnehmung in Richtung des in die Ausnehmung einzufördernden Behälters gerichtet ist und nach dem Einfördern des Behälters bzw. des Behälterhalses in die Ausnehmung die Haltemittel mit dem bewegtem Behälter mitverschwenkt werden, bis dieser die Übergabeposition erreicht hat. Damit lässt sich ein kollisionsfreies Einfädeln der Haltemittel der Hubeinrichtung erreichen. In gleicher Weise ist ein kollisionsfreies Ausfördern des Behälters aus der Ausnehmung möglich, und zwar durch Verschwenken der Haltemittel in Richtung der Bewegungsrichtung des ausgeförderten Behälters.

In einem bevorzugten Ausführungsbeispiel sind die Hubeinrichtung oder daran vorgesehene Haltemittel in radialer Richtung gegenüber der Maschinenachse des Transportelements verfahrbar ausgebildet. Dadurch lässt sich nach dem Zuführen eines Behälters auf die Übergabeposition die Hubeinrichtung bzw. die Haltemittel aus einer zurückgezogenen Position, an der die Haltemittel von dem Behälter beanstandet sind, in eine vorgeschobene Position bringen, in der die Haltemittel zumindest teilweise den Behälter umfangsseitig umgreifen. Damit ist es ebenfalls möglich, einen kollisionsfreien Ein- bzw. Auslauf des Behälters zu bewirken.

Bevorzugt erfolgt die Zuführung und Abführung der Behälter zu dem Transferstern mittels eines einzigen, unterhalb des Transfersterns verlaufenden Transporteurs. Der Transporteur kann beispielsweise durch ein umlaufendes Transportband, eine umlaufende Transportkette oder ähnliche Transporteinrichtungen gebildet werden. Vorzugsweise ist der Transporteur, der die Zuführung bzw. Abführung der Behälter bewirkt, geradlinig ausgebildet, d.h. die Zuführung und die Abführung der Behälter erfolgt in der gleichen Raumrichtung. Weiterhin vorzugsweise verläuft der Transporteur mittig unterhalb der Maschinenachse, um die der Transferstern umläuft. Damit kann die Zuführung bzw. Abführung mit geringem technischen Aufwand realisiert werden.

Besonders bevorzugt ist die Behälterbehandlungsmaschine als Füllmaschine ausgebildet. Durch die Zuführung bzw. Abführung der Behälter mittels eines einzigen Transfersterns wird der nicht für den Füllvorgang zur Verfügung stehende Winkelbereich des die Füllelemente tragenden Transportelements minimiert, da kein Verlustwinkel zwischen einem zuführenden Transferstern bzw. einem abführenden Transferstern entsteht. Damit steht nahezu die gesamte Dauer eines Umlaufs des Transportelements für den eigentlichen Füllprozess zur Verfügung. Dies ist insbesondere bei großvolumigen Behältern, beispielsweise bei so genannten PET-Kegs von großem Vorteil.

Die Erfindung bezieht sich des Weiteren auf ein Verfahren zum Zuführen und/oder Abführen von Behältern zu einer Behälterbehandlungsmaschine umfassend ein um eine vertikale Maschinenachse umlaufendes Transportelement mit einer Vielzahl von Behandlungsstationen zum Behandeln von Behältern und einem einzigen Transferstern mit Behälteraufnahmen, mittels dem ein Zuführen der zu behandelnden Behälter und das Abführen der bereits behandelten Behälter erfolgt, umfassend folgende Schritte:
- Zuführen zumindest eines zu behandelnden Behälters zu einer Behälteraufnahme des Transfersterns, wobei die Behälteraufnahme durch eine umfangsseitig angeordnete Ausnehmung des Transfersterns gebildet wird;
- Transport des zu behandelnden Behälters an eine Übergabeposition und/oder Ausrichten des zu behandelnden Behälters an einer Übergabeposition durch den Transferstern;
- Übergabe des zu behandelnden Behälters an eine Behandlungsstation des Transportelements;
- Drehung des Transportelements zur Positionierung eines bereits behandelten Behälters über einer behälterfreien Behälteraufnahme des Transfersterns;
- Übergabe des bereits behandelten Behälters an die behälterfreie Behälteraufnahme des Transfersterns; und
- Abtransport des behandelten Behälters.

In einem bevorzugten Ausführungsbeispiel erfolgt die Übergabe des zu behandelnden Behälters an eine Behandlungsstation des Transportelements durch Anheben des zu behandelnden Behälters von der Übergabeposition in eine Behandlungsposition. Durch das Anheben wird eine behälterfreie Behälteraufnahme geschaffen, in die nach Drehung des Transportelements ein über dieser behälterfreien Behälteraufnahme positionierter, bereits behandelter Behälter eingebracht werden kann. Durch das Anheben des Behälters und das anschließende Verdrehen des Transportelements gegenüber dem feststehenden Transferstern wird eine in einem Arbeitsschritt frei gewordene Behälteraufnahme im darauf folgenden Arbeitsschritt mit einem bereits behandelten Behälter befüllt, so dass beim getakteten Weiterdrehen des Transfersterns dieser bereits behandelte Behälter von der Übergabeposition weg dem Transporteur zugeführt wird. Dadurch wird auch mittels lediglich eines einzigen Transfersterns eine zügige und störungsfreie Zuführung bzw. Abführung der Behälter bewirkt.

Besonders bevorzugt weist die Hubeinrichtung Haltemittel zum zumindest teilweisen Umgreifen eines Behälters auf, wobei diese Haltemittel derart verschwenkt und/oder verfahren werden, dass eine Kollision mit einem vom Transferstern geförderten Behälter während des Verdrehens des Transportelements und/oder des Transfersterns vermieden wird.

Weiterhin vorzugsweise wird zum kollisionsfreien Umgreifen des Behälters durch Haltemittel der Hubeinrichtung beim Zuführen der Behälter zu der Übergabeposition oder zum kollisionsfreien Freigeben des Behälters durch die Haltemittel der Hubeinrichtung das Transportelement zumindest zeitweise gleichzeitig mit dem Transferstern um einen Winkelbetrag gedreht, wobei das Transportelement und der Transferstern unterschiedliche Drehrichtungen aufweisen. Dadurch lässt sich ein kollisionsfreier Einlauf bzw. Auslauf des Behälters an die Übergabeposition bzw. von der Übergabeposition bewirken.

In einem bevorzugten Ausführungsbeispiel ist die Behälterbehandlungsmaschine eine Füllmaschine und die Behälter werden während der gesamten Dauer oder im Wesentlichen der gesamten Dauer der Volldrehung des Transportelements mit einem Füllgut befüllt. Durch die Verwendung eines einzelnen Transferstern zur Zuführung bzw. Abführung der Behälter wird damit ein minimaler Verlustwinkel an dem Transportelement der Behandlungsmaschine, der nicht zum Füllvorgang verwendet werden kann, erreicht.

Behälter im Sinne der Erfindung sind beispielsweise Flaschen, Dosen oder ähnliche Behältnisse aus jeglichem dafür geeigneten Material, insbesondere aus Glas, Kunststoff oder Metall.

Behälterbehandlungsmaschine im Sinne der Erfindung sind jegliche Maschinen, mit denen eine Behälterbehandlung vollzogen werden kann, beispielsweise Füllmaschinen, Reinigungsmaschinen, Inspektionsmaschinen oder Maschinen zur Ausstattung der Behälter mit Ausstattungsmerkmalen.

Unter Ausnehmungen im Sinne der Erfindung sind jedwede Aufnahmen zu verstehen, die zur Halterung und/oder Führung der Behälter an dem bzw. gegenüber dem Transferstern geeignet sind. Ausnehmungen können insbesondere auch Bestandteil von Halte- und Fixierelementen sein, die umfangsseitig am Transferstern angeordnet sind und zur Fixierung der jeweiligen Behälter am Transferstern dienen. Die Halte- und Fixierelemente können insbesondere eine rastende Aufnahme für die Behälter bilden und/oder Greifer artig ausgebildete, beispielsweise federbelastete ausgebildet sein. Damit kann beispielsweise auf eine Außenführung verzichtet werden, die ein radiales Ausweichen der Behälter nach außen hin unterbindet.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine erfindungsgemäße Behälterbehandlungsmaschine in einer schematischen Draufsicht;
- Fig. 2: beispielhaft die erfindungsgemäße Behälterbehandlungsmaschine gemäß Figur 1 in einer Schnittdarstellung;
- Fig. 3: beispielhaft eine erfindungsgemäße Behälterbehandlungsmaschine in einem zweiten Ausführungsbeispiel in einer schematischen Draufsicht;
- Fig. 4: beispielhaft die erfindungsgemäße Behälterbehandlungsmaschine gemäß Figur 3 in einer Schnittdarstellung entlang der Schnittlinie A-A;
- Fig. 5: beispielhaft eine erfindungsgemäße Behälterbehandlungsmaschine in einem dritten Ausführungsbeispiel in einer schematischen Draufsicht;
- Fig. 6: beispielhaft die erfindungsgemäße Behälterbehandlungsmaschine gemäß Figur 5 in einer Schnittdarstellung entlang der Schnittlinie A-A; und
- Fig. 7: beispielhaft eine erfindungsgemäße Behälterbehandlungsmaschine in einem vierten Ausführungsbeispiel in einer schematischen Draufsicht.

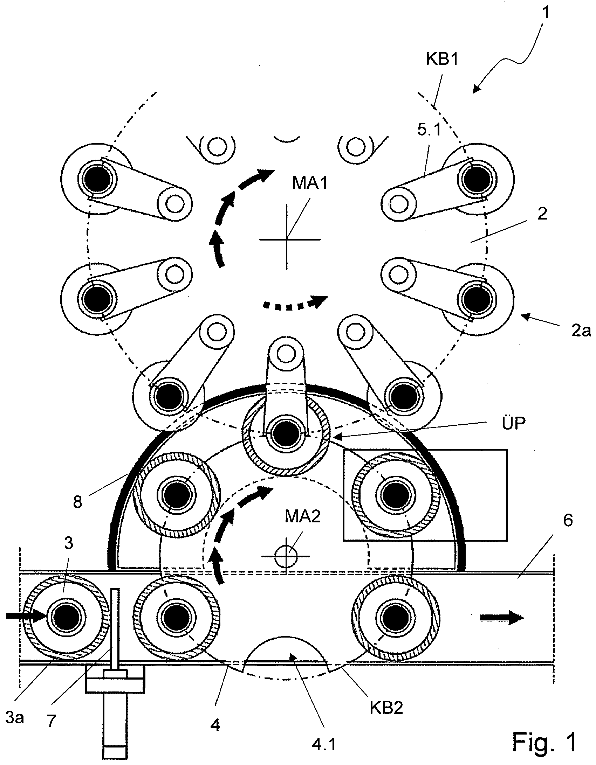

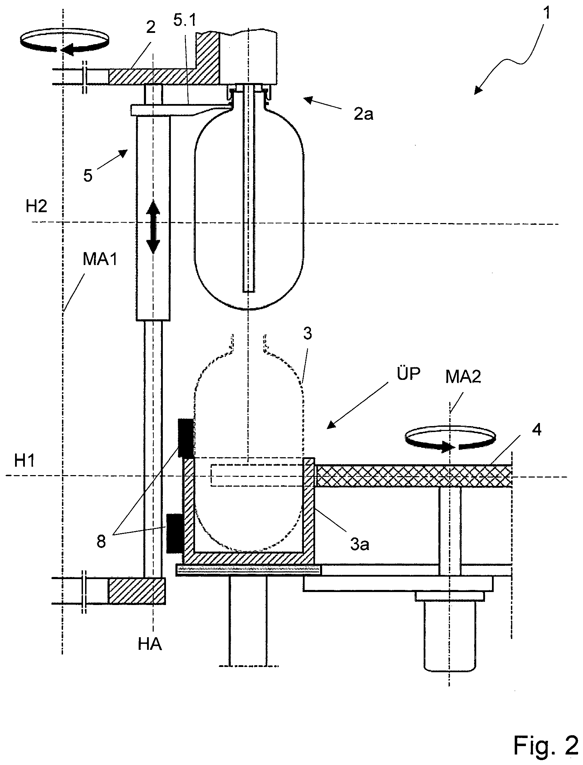

In den Figuren 1 und 2 ist eine erfindungsgemäße Behälterbehandlungsmaschine 1 in einem ersten Ausführungsbeispiel gezeigt. Die Behälterbehandlungsmaschine 1 weist ein um eine vertikale Maschinenachse MA1 umlaufendes Transportelement 2 auf. An dem Transportelement 2 sind eine Vielzahl von Behandlungsstationen 2a umfangsseitig verteilt angeordnet, an denen die Behandlung der der Behälterbehandlungsmaschine 1 zugeführten Behälter 3 erfolgt. Die Behälterbehandlungsmaschine 1 ist im gezeigten Ausführungsbeispiel eine Füllmaschine mit an den Behandlungsstationen 2a vorgesehenen Füllelementen, so dass die Behälterbehandlung im gezeigten Ausführungsbeispiel eine Füllung dieser Behälter 3 mit einem Füllgut ist.

Zur Zuführung von zu behandelnden Behältern 3 bzw. zur Abführung von bereits behandelten Behältern 3 ist ein Transferstern 4 vorgesehen, der durch ein Zusammenwirken mit einem Transporteur 6 ein Zuführen bzw. Abführen der Behälter 3 an die bzw. von den Behandlungsstationen 2a bewirkt. Der Transporteur 6 wird im gezeigten Ausführungsbeispiel durch einen Linearförderer, insbesondere ein Transportband oder eine Transportkette gebildet, der unterhalb des Transfersterns 4, d.h. unterhalb des Bewegungsraums, mit dem die Behälter 3 durch den Transferstern 4 gefördert werden, hindurchgeführt ist. Im dargestellten Ausführungsbeispiel ist lediglich ein einziger Transporteur 6 vorgesehen, die die Zuführung bzw. Abführung der Behälter bewirkt.

Im gezeigten Ausführungsbeispiel erfolgt die Zuführung der Behälter 3 bzw. deren Abführung mittels Behälterträger 3a, im Folgenden auch als Pucks bezeichnet. Derartige Behälterträger 3a finden insbesondere dann Anwendung, wenn zum Umfallen neigende Behälter 3 bzw. Behälter, die keine eigenständige Bodenstandfläche aufweisen, beispielsweise so genannte PET-Keg's verwendet werden. Im gezeigten Ausführungsbeispiel sind dies großvolumige Behältnisse aus einem Kunststoffmaterial mit einem Volumen von 10l, 20l oder 30l. Jedoch können mit der Behälterbehandlungsmaschine 1 auch Behälter 3 ohne Behälterträger 3a behandelt werden.

Gemäß Figur 1 werden die Behälter 3 durch den Transporteur 6 aufrecht stehend, d.h. in einer vertikalen Ausrichtung der Behälterhochachse einem Stopperelement 7 zugeführt, das eine zeitlich getaktete Freigabe bzw. Weiterleitung der Behälter 3 an den Transferstern 4 bewirkt. Zur Mitführung der Behälter 3 durch den Transferstern 4 sind an diesem umfangsseitig angeordnete Ausnehmungen 4.1 vorgesehen, in welche die Behälter 3 bzw. die Behälterträger 3a zumindest teilweise umfangsseitig aufgenommen werden können, so dass ein die Mitführung bewirkender Eingriff des Behälters 3 bzw. des Behälterträgers 3A in den Transferstern 4 erfolgt. Durch das Stopperelement 7 wird die Weiterleitung eines angestauten Behälters 3 zeitlich getaktet derart freigegeben, dass dieser durch den Transporteur 6 in eine Ausnehmung 4.1 des Transfersterns 4 eingefördert wird.

Der Transferstern 4 ist um eine vertikale zweite Maschinenachse MA2 umlaufend angetrieben, die parallel und beabstandet zur ersten Maschinenachse MA1 verläuft. Bei einer Drehung des Transfersterns 4 um diese zweite Maschinenachse MA2 wird der in die Ausnehmung 4.1 durch den Transporteur 6 geförderte Behälter in einer Kreisbewegung um einen Winkelbetrag mitgeführt und dabei einer Übergabeposition ÜP zugeführt. Um ein radiales Ausweichen des Behälters 3 zu verhindern, ist eine Außenführung 8 vorgesehen, die zumindest in einer Teilkreisbahn um den Transferstern 4 herum radial zu diesem beabstandet verläuft. Der Transferstern 4 kann insbesondere durch einen dafür geeigneten Antrieb, insbesondere einen Servomotor getaktet angetrieben sein, so dass der Transferstern 4 und damit die in den Ausnehmungen 4.1 befindlichen Behälter 3 intermittierend bzw. zeitlich getaktet der Übergabeposition ÜP zugeführt werden. Die Übergabeposition ÜP befindet sich vorzugsweise an dem Tangentialberührpunkt der Kreisbahnen KB1, KB2, auf denen die Behälter 3 durch das Transportelement 2 und den Transferstern 4 gefördert werden. Der an der Übergabeposition ÜP befindliche Behälter befindet sich vorzugsweise mit seiner Behälterhochachse in diesem Tangentialberührpunkt, d.h. der Tangentialberührpunkt der Kreisbahnen KB1, KB2 liegt auf der Behälterhochachse.

Zeitlich synchronisiert zur Förderung eines Behälters 3 an die Übergabeposition ÜP befindet sich eine Behandlungsstation 2a an dieser Übergabeposition ÜP, wobei diese Behandlungsstation 2a vorzugsweise mittig auf den Tangentialberührpunkt ausgerichtet ist. An jeder Behandlungsstation 2a des dargestellten Ausführungsbeispiels ist eine Hubeinrichtung 5 vorgesehen, die in einer vertikalen Richtung parallel und beanstandet zur ersten Maschinenachse MA1 verschiebbar ausgebildet ist. Die Hubeinrichtung 5 weist Haltemittel 5.1 auf, die zum zumindest teilweisen Umgreifen des zu behandelnden Behälters 3 ausgebildet sind. Die Haltemittel 5.1 werden im gezeigten Ausführungsbeispiel durch einen Neckringhalter gebildet, der zum zumindest teilweisen Umgreifen des Behälterhalses unterhalb des dort vorgesehenen Neckrings ausgebildet ist. Alternativ können auch Haltemittel 5.1 in Form von zumindest einem Greifer vorgesehen sein, der zumindest zwei relativ zueinander bewegliche Greiferelemente aufweist, um den zu behandelnden Behälter 3 zumindest teilweise zangenartig zu umgreifen.

Mittels der dem Transportelement 2 zugeordneten Hubeinrichtung 5 bzw. dem daran vorgesehenen Haltemittel 5.1 wird ein Anheben der Behälter 3 von einer ersten Höhenebene H1, in der die Behälter 3 durch den Transferstern 4 gefördert werden, in eine zweite Höhenebene H2 angehoben und dabei in eine Behandlungsposition an der Behandlungsstation 2a gebracht. Im gezeigten Ausführungsbeispiel wird durch das Anheben der Behälter 3 aus dem Behälterträger 3a gezogen, der in der Aufnahme 4.1 des Transfersterns 4 verbleibt und das der Behandlungsstation 2a zugeordnete Füllrohr eines Füllelements über die Behältermündung in den Behälterinnenraum eingeführt. Ferner wird mittels der Haltemittel 5.1 der Behälter 3 mit seiner Behältermündung an das Füllelement angepresst.

Nach dem Anheben des Behälters 3 und dem damit bewirkten außer Eingriff bringen kann das Transportelement 2 samt dem aufgenommenen, zu behandelnden Behälter 3 um die erste Maschinenachse MA1 getaktet gedreht werden. Dabei kann unmittelbar nach dem an Pressen des Behälters 3 der Füllvorgang beginnen. Die Drehung des Transportelements 2 erfolgt vorzugsweise um einen Winkelbetrag derart, dass die nächste, entgegen der Drehrichtung des Transportelements 2 auf die Behandlungsstation 2a, die gerade den zu behandelnden Behälter 3 aufgenommen hat, folgende Behandlungsstation 2a einen bereits behandelten, im gezeigten Ausführungsbeispiel gefüllten Behälter 3 oberhalb der nicht belegten, freien Behälteraufnahme des Transfersterns 4 positioniert. In anderen Worten, die nächste Behandlungsstation 2a wird mittig derart auf den Tangentialberührpunkt ausgerichtet, dass der bereits behandelte Behälter 3 exakt oberhalb der freien Behälteraufnahme bzw. dem dort noch befindlichen, freien Behälterträger 3a positioniert ist. Anschließend kann mittels der Hubeinrichtung 5 ein Absenken des Behälters 3 aus der Behandlungsposition in die Behälteraufnahme des Transfersterns 4 erfolgen und dieser behandelte Behälter 3 durch getaktete Drehung des Transfersterns 4 dem Transporteur 6 zugeführt werden. Im gezeigten Ausführungsbeispiel erfolgt die Abgabe an den Transporteur 6 erst nach einer weiteren getakteten Weiterdrehung, d.h. einer weiteren Entnahme eines zu behandelnden Behälters 3 bzw. einem weiteren Einbringen eines bereits behandelten Behälters 3.

Das Weiterfördern des bereits behandelten Behälters 3 erfolgt vorzugsweise ebenfalls getaktet durch Drehung des Transfersterns 4 um einen Winkelbetrag, der durch den Winkel zwischen zwei aufeinanderfolgenden Ausnehmungen 4.1 bzw. Behälteraufnahmen des Transfersterns 4 definiert wird. Damit gelangt beim Weiterfördern des bereits behandelten Behälters 3 ein neuer, zu behandelnder Behälter 3 an die Übergabeposition ÜP, an der sich noch die vorherige, den bereits behandelten Behälter 3 freigebende Behandlungsstation 2a befindet, so dass der Übergabeprozess dieses noch zu behandelnden Behälters 3 durch Anheben desselben durch die Hubeinrichtung 5 eingeleitet werden kann.

Vorzugsweise sind die Hubeinrichtung 5 bzw. die daran vorgesehenen Haltemittel 5.1 derart ausgebildet, dass beim Fördern eines zu behandelnden Behälters 3 an die Übergabeposition ÜP, an der sich bereits eine behälterfreie Behandlungsstation 2a befindet, eine Kollision zwischen dem Haltemittel 5.1 und dem Behälter 3 wirksam vermieden wird. Dazu ist es denkbar, die Haltemittel 5.1 in radialer Richtung in Bezug auf die erste Maschinenachse MA1 verschiebbar auszubilden, um durch diese Verschiebbarkeit ein Bewegen der Haltemittel 5.1 in eine zurückgezogene Stellung, in der sich die Haltemittel 5.1 außerhalb der Bewegungsbahn des Behälters 3 befinden und in eine vorgeschobene Stellung, in der die Haltemittel 5.1 den Behälter 3 zumindest teilweise radial umgreifen, zu bewirken.

Zusätzlich oder alternativ können die Haltemittel 5.1 bzw. die Hubeinrichtung verschwenkbar ausgebildet sein, beispielsweise um eine Hubachse HA, entlang der die Hubbewegung der Hubeinrichtung 5 erfolgt. Dadurch ist es möglich, die Haltemittel 5.1 beim Einlauf des zu behandelnden Behälters 3 derart auf diesen auszurichten und vorzugsweise beim Einlauf in die Übergabeposition ÜP derart durch ein Rückschwenken mitzuführen, dass ein kollisionsfreier Einlauf in die am Haltemittel 5.1 vorgesehene Ausnehmung möglich ist. So ist es beispielsweise bei einem als Neckringhalter ausgebildeten Haltemittel 5.1 möglich, dass die den Behälterhals zumindest teilweise aufnehmende Ausnehmung des Neckringhalters auf den Behälterhals des einlaufenden Behälters 3 ausgerichtet wird und nach Einführen des Behälterhalses in diese Ausnehmung durch Drehung mit dem weiterhin durch den Transferstern 4 bis zur Übergabeposition ÜP weitergeführten Behälter 3 mitgeschwenkt wird. In gleicher Weise ist es möglich, den Behälterauslauf durch Verschwenken der Hubeinrichtung 5 bzw. der Haltemittel 5.1 in Richtung des auslaufenden Behälters 3 kollisionsfrei vorzunehmen.

Für den Fall, dass die Haltemittel 5.1 greiferartig mit zwei relativ zueinander verschwenk- bzw. verfahrbaren Greiferelementen ausgebildet sind, ist es möglich, diese derart zueinander zu bewegen, dass ein kollisionsfreier Ein- bzw. Auslauf möglich wird. Insbesondere ist es möglich, den Greifer derart weit zu öffnen, dass sich die Greiferelemente außerhalb der Bewegungsbahn des ein- bzw. auslaufenden Behälters 3 befinden.

Alternativ oder zusätzlich zu den vorbeschriebenen Maßnahmen ist es weiterhin möglich, dass das Transportelement 2 und der Transferstern 4 gegensinnig in unterschiedliche Drehrichtungen zeitgleich bewegt werden, um dadurch ein Einfädeln der Haltemittel am Behälter 3 und damit einen kollisionsfreien Einlauf bzw. Auslauf des Behälters 3 zu ermöglichen. Beim Einlauf eines zu behandelnden Behälters 3 an die Übergabeposition ÜP wird dabei die freie Behandlungsstation 2a, die zur Übernahme des zu behandelnden Behälters vorgesehen ist, durch Verdrehen des Transportelements 2 entgegen deren Hauptdrehrichtung (hier entgegen dem Uhrzeigersinn), d.h. in einer Drehrichtung im Uhrzeigersinn um einen Winkelbetrag verdreht, und zwar kurz bevor der Transferstern 4 den zu behandelnden Behälter 3 in Richtung der Übergabeposition ÜP bewegt. Damit werden die Haltemittel 5.1 derart positioniert, dass ein kollisionsfreier Einlauf des Behälters 3 in die an dem Haltemittel 5.1 vorgesehene Ausnehmung ermöglicht wird. Nach dem Einfädeln des Behälters 3 in diese Ausnehmung erfolgt eine zeitgleiche Drehung des Transportelements 2 und des Transfersterns 4 in unterschiedlichen Drehrichtungen, und zwar solange, bis sich der durch den Transferstern 4 geförderte Behälter 3 und die Behandlungsstation 2a des Transportelements 2 am Tangentialberührpunkt bzw. an der Übergabeposition ÜP befinden. In anderen Worten, das Transportelement 2 vollzieht zum Bewirken eines kollisionsfreien Einlaufs zunächst ausgehend von der Stellung, an der sich die behälterfreie Behandlungsstation 2a an der Übergabeposition ÜP befindet, eine Drehung um einen Winkelbetrag in derselben Drehrichtung, in der der Transferstern 4 gedreht wird, und nach dem Einfädeln des Behälters 3 eine Rückdrehung entgegen der Drehrichtung des Transfersterns 4 an diese Übergabeposition.

In gleicher Weise kann ebenfalls ein kollisionsfreier Auslauf durch eine gleichzeitige Drehung des Transfersterns 4 und des Transportelements 2 und damit verbundenem Ausfädeln der Haltemittel 5.1 aus der den Behälter 3 umgreifenden Stellung bewirkt werden. Dabei wird beim Ausfördern eines bereits behandelten Behälters 3 durch Drehung des Transfersterns 4 das Transportelement 2 entgegen der Drehrichtung des Transfersterns 4 um einen Winkelbetrag verdreht und nach dem Ausfädeln des Behälters 3 das Transportelement 2 auf die Übergabeposition ÜP zurückgedreht. Hierbei ist es auch möglich, dass diese Rückdrehung über die Übergabeposition ÜP hinaus erfolgt, um ein nachfolgendes Einfädeln der Haltemittel 5.1 an dem nachfolgend einlaufenden Behälter 3, wie oben beschrieben, zu ermöglichen. Diese Vorgehensweise eignet sich insbesondere dann, wenn keine unterschiedlichen Höhenebenen vorgesehen sind.

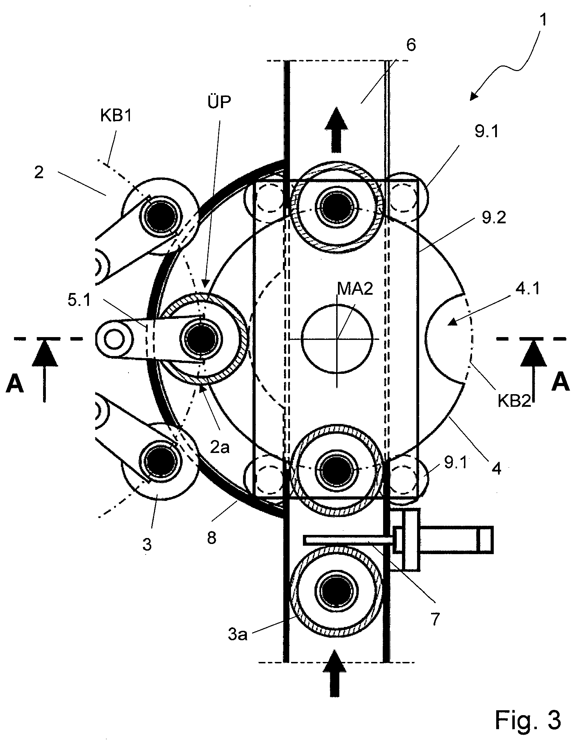

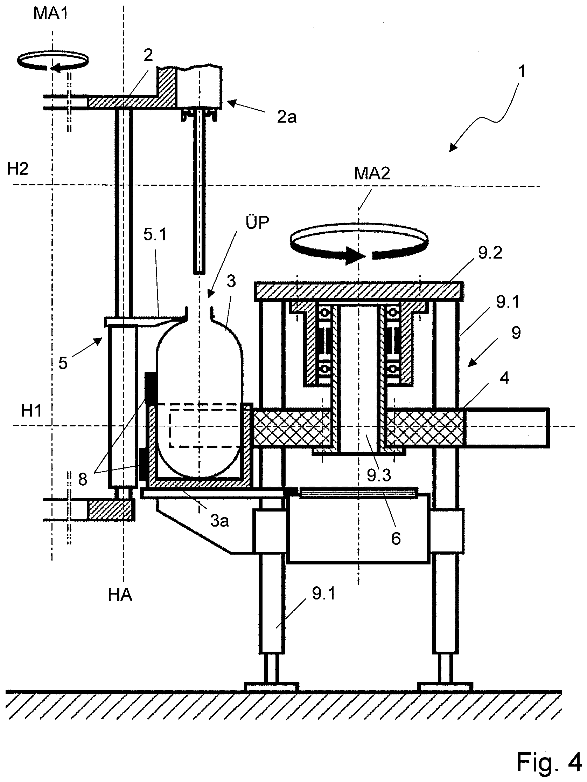

Figuren 3 und 4 zeigen ein zweites Ausführungsbeispiel der erfindungsgemäßen Behälterbehandlungsmaschine 1, das sich im Wesentlichen durch die Lage des Transporteurs 6 relativ zum Transportstern 4 und durch die Ausbildung des Transportsterns 4 selbst vom zuvor beschriebenen ersten Ausführungsbeispiel unterscheidet. Sofern nachfolgend nicht anders beschrieben, gelten die zuvor getroffenen Ausführungen. Entgegen dem zuvor beschriebenen Ausführungsbeispiel erfolgt hier eine Durchführung des Transporteurs 6 unterhalb der Maschinenachse MA2 des Transfersterns 4, und zwar insbesondere derart, dass der Transporteur 6 mittig unterhalb der Maschinenachse MA2 hindurchgeführt wird. Dabei ist ein einziger durchlaufender Transporteurs 6 sowohl für die Zuführung der zu behandelnden Behälter zu dem Transferstern 4 als auch für die Abführung der bereits behandelten Behälter 3 vom Transferstern 4 vorgesehen.

Um den zum Durchführen des Transporteurs 6 mittig unter dem Transferstern 4 nötigen Freiraum zu schaffen, ist der Transferstern 4 hängend drehbar an einer Befestigungseinrichtung 9 gehalten. Die Befestigungseinrichtung 9 ist gestellartig aus mehreren Säulen 9.1 und einem oberseitig die Säulen 9.1 miteinander verbindenden Konstruktionselement 9.2, das insbesondere plattenartig ausgebildet sein kann, gebildet. Am Konstruktionselement 9.2 unterseitig abstehend ist ein Rundelement 9.3 vorgesehen, das fest mit dem Konstruktionselement 9.2 verbunden ist und die zweite Maschinenachse MA 2 bildet, um die sich der Transferstern 4 zu drehen vermag. Durch diese Bauweise wird der sonst übliche Unterbau für den Transferstern 4 vermieden, so dass eine zentrale Zuführung der Behälter 3 in einer die zweite Maschinenachse MA 2 aufnehmenden Ebene bei unter dem Transferstern 4 durchlaufendem Transporteur 6 möglich ist. An der Befestigungseinrichtung 9 können weitere für das Zuführen der Behälter 3 zu der Behälterbehandlungsmaschine 1 vorgesehene Funktionselemente, beispielsweise der Transporteur 6, Gleitbleche, Außenführungen etc. gehalten sein.

Vorzugsweise ist zum Antrieb des Transfersterns 4 ein Direktantrieb, insbesondere ein Torque-Motor vorgesehen, der besonders bevorzugt zwischen dem Konstruktionselement 9.2 und dem Transferstern 4 angeordnet ist.

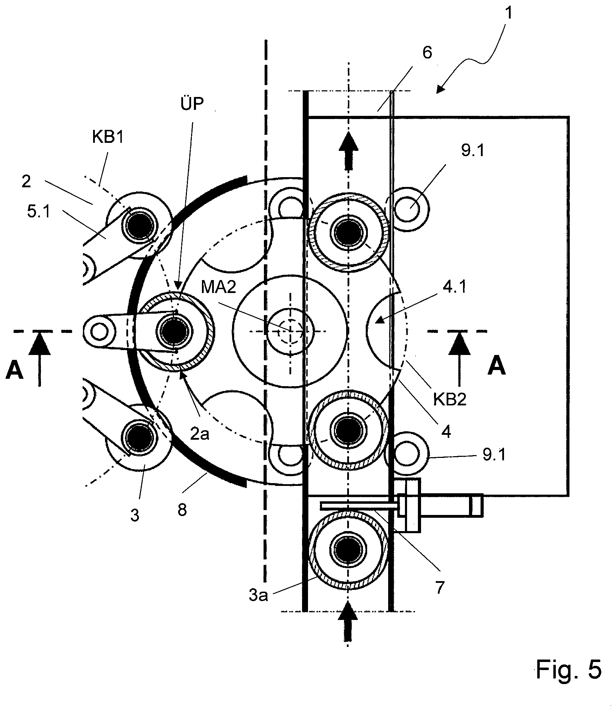

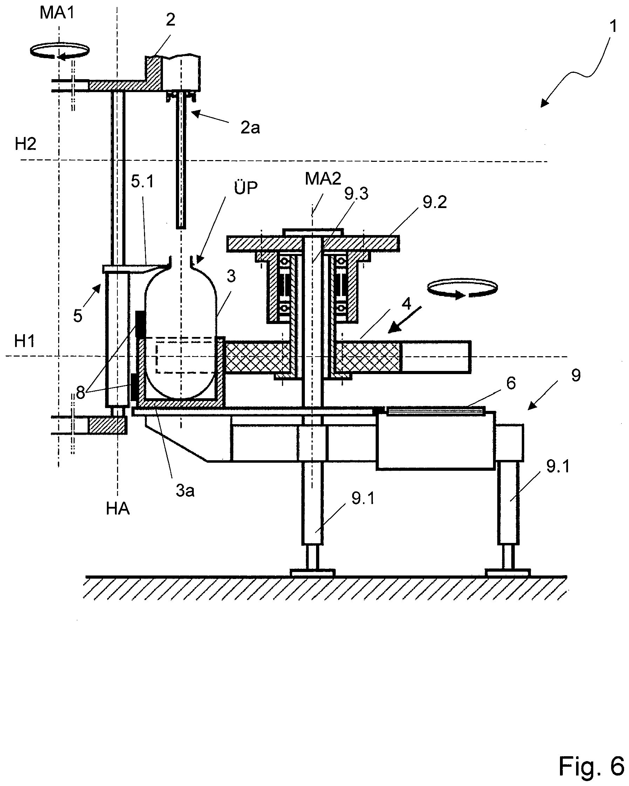

Figuren 5 und 6 zeigen die erfindungsgemäße Behälterbehandlungsmaschine 1 in einer dritten Ausführungsform. Sofern nachfolgend nicht anders beschrieben, gelten die zuvor hinsichtlich der vorherigen Ausführungsbeispiele getroffenen Ausführungen Der Transporteur 6 ist hier ähnlich dem ersten Ausführungsbeispiel seitlich versetzt gegenüber der zweiten Maschinenachse MA 2 unter dem Transferstern 4 hindurchgeführt, wohingegen der Antrieb des Transfersterns 4 ähnlich dem zweiten Ausführungsbeispiel über einen Direktantrieb, insbesondere als einen Torque-Motor erfolgt.

Im Unterschied zu den vorherigen Ausführungsbeispielen ist jedoch eine aufstehende Halterung des Transfersterns 4 vorgesehen, und zwar auf einem Gestell, das eine Säule 9.1 aufweist, die als zentrale Mittelsäule ausgebildet ist und damit die zweite Maschinenachse MA 2 des Transfersterns 4 bildet. An dem Gestell können weitere für das Zuführen der Behälter 3 zu der Behälterbehandlungsmaschine 1 vorgesehene Funktionselemente, beispielsweise der Transporteur 6, Gleitbleche, Außenführungen etc. angebracht sein.

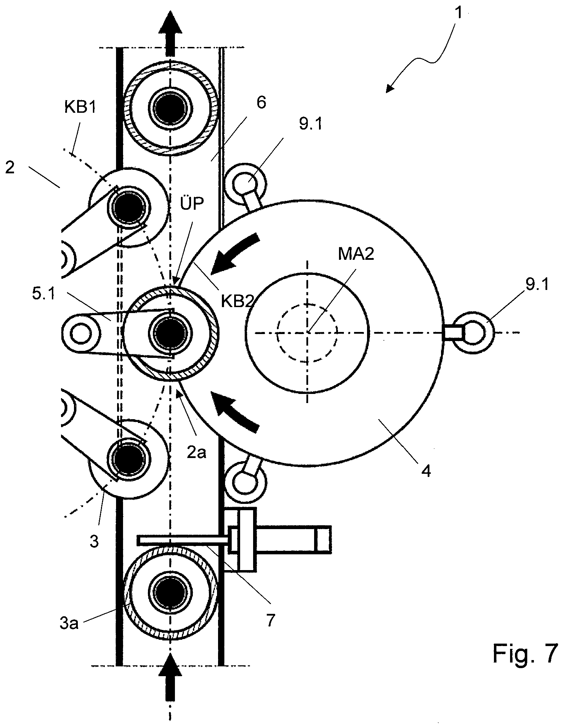

In Figur 7 ist ein weiteres Ausführungsbeispiel der erfindungsgemäßen Behälterbehandlungsmaschine 1 gezeigt. In diesem Ausführungsbeispiel ist der Transporteurs 6 zwischen der ersten Maschinenachse MA 1, um die sich das Transportelement 2 dreht, und der zweiten Maschinenachse MA2, um die sich der Transferstern 4 dreht, angeordnet. Vorzugsweise verläuft der Transporteur 6 unmittelbar unterhalb der Behandlungsstation 2a, die sich am tangentialen Berührpunkt zwischen dem Transferstern 4 und dem Transporteur 2 bzw. der Übergabeposition ÜP befindet. Der Transferstern 4 dient in diesem Ausführungsbeispiel lediglich zur Aufnahme des Behälters 3 an der am Transferstern 4 vorgesehenen Ausnehmung 4.1 und zur Fixierung dieses Behälters 3. Zur Aufnahme des Behälters 3 in einer Ausnehmung 4.1 des Transferstern 4 kann dieser in eine erste Drehrichtung, beispielsweise in eine entgegen dem Uhrzeigersinn gerichtete Drehrichtung um einen Winkelbetrag getaktet verdreht werden und nach dem Einlauf eines zu behandelnden Behälters 3 in die Ausnehmung 4.1 derart rückverdreht werden, dass der Behälter 3 an der Übergabeposition ÜP, d.h. am tangentialen Berührpunkt positioniert wird.

Das Abführen eines bereits behandelten Behälters 3 durch den Transferstern 4 ist durch eine Verdrehung desselben im Uhrzeigersinn, d.h. in einer Drehrichtung, die der beim Zuführen eines Behälters zuvor beschriebenen Drehrichtung entgegen gerichtet ist, möglich, wobei durch diese Verdrehung der bereits behandelte Behälter 3 durch den Transporteur 6 aus der Ausnehmung 4.1 herausgeführt und abtransportiert wird.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

So wurde in den zuvor beschriebenen Ausführungsbeispielen ständig davon ausgegangen, dass zum Zuführen der zu behandelnden Behälter 3 zu dem Transferstern 4 und zum Abführen der bereits behandelten Behälter 3 lediglich ein einziger, durchgehender Transporteur 6 verwendet wird, der abschnittsweise unterhalb des Transfersterns 4 hindurchgeführt wird. Abweichend hiervon ist es ebenso möglich, zwei voneinander getrennte Transporteure 6 zum Zu- bzw. Abführen zu verwenden.

Ferner ist es mittels des Transfersterns auch möglich, den durch die Behälterbehandlungsmaschine bereits behandelten Behälter nicht einem den Abtransport bewirkenden Transporteur zuzuführen, sondern unmittelbar einer weiteren Behälterbehandlungsmaschine.

### Bezugszeichenliste

- 1: Behälterbehandlungsmaschine
- 2: Transportelement
- 2a: Behandlungsstation
- 3: Behälter
- 3a: Behälterträger
- 4: Transferstern
- 4.1: Ausnehmung
- 5: Hubeinrichtung
- 5.1: Haltemittel
- 6: Transporteur
- 7: Stopperelement
- 8: Außenführung
- 9: Befestigungseinrichtung
- 9.1: Säule
- 9.2: Konstruktionselement
- 9.3: Rundelement

- HA: Hubachse
- H1: erste Höhenebene
- H2: zweite Höhenebene
- KB1, KB2: Kreisbahn
- MA1: erste Maschinenachse
- MA2: zweite Maschinenachse
- ÜP: Übergabeposition

## Patentansprüche

1. Behälterbehandlungsmaschine umfassend ein um eine vertikale Maschinenachse (MA1) umlaufendes Transportelement (2) mit einer Vielzahl von Behandlungsstationen (2a) zum Behandeln von Behältern (3) und einen einzigen Transferstern (4), mittels dem ein Zuführen der zu behandelnden Behälter (3) zum Transportelement (2) und das Abführen der bereits behandelten Behälter (3) vom Transportelement (2) erfolgt, wobei der Transferstern (4) umfangsseitig angeordnete Ausnehmungen (4.1) aufweist, in die die Behälter (3) zur Zuführung und Abführung zumindest teilweise aufgenommen sind, **dadurch gekennzeichnet, dass** die Übergabe des zu behandelnden Behälters (3) an eine Behandlungsstation (2a) des Transportelements (2) durch Anheben des zu behandelnden Behälters (3) von einer Übergabeposition (ÜP) in eine Behandlungsposition durch eine am Transportelement (2) vorgesehene Hubeinrichtung (5) erfolgt, und dass das Transportelement (2) und der Transferstern (4) unabhängig voneinander antreibbar ausgebildet sind.

2. Behälterbehandlungsmaschine nach Anspruch 1, **dadurch gekennzeichnet, dass** die Zuführung bzw. Abführung der Behälter (3) durch den Transferstern (4) in einer ersten Höhenebene (H1) und die Behandlung der Behälter (3) an den Behandlungsstationen (2a) in einer zweiten, oberhalb der ersten Höhenebene (H1) liegenden Höhenebene (H2) erfolgt.

3. Behälterbehandlungsmaschine nach Anspruch 2, **dadurch gekennzeichnet, dass** am Transportelement (2) den Behandlungsstationen (2a) zugeordnete Hubeinrichtungen (5) vorgesehen sind, die zum Anheben der Behälter (3) von der ersten Höhenebene (H1) in die zweite Höhenebene (H2) und zum Absenken der Behälter (3) von der zweiten Höhenebene (H2) in die erste Höhenebene (H1) ausgebildet sind.

4. Behälterbehandlungsmaschine nach Anspruch 3, **dadurch gekennzeichnet, dass** jeder Behandlungsstation (2a) des Transportelements (2) jeweils eine eigenständige Hubeinrichtung (5) zugeordnet ist.

5. Behälterbehandlungsmaschine nach einem der vorhergehenden Ansprüche, **dadurch gekennzeichnet, dass** das Transportelement (2) und der Transferstern (4) zumindest teilweise wechselseitig getaktet oder intermittierend antreibbar ausgebildet sind.

6. Behälterbehandlungsmaschine nach einem der vorhergehenden Ansprüche, **dadurch gekennzeichnet, dass** das Transportelement (2) und/oder der Transferstern (4) in unterschiedlche Drehrichtungen antreibbar ausgebildet istfsind.

7. Behälterbehandlungsmaschine nach einem der vorhergehenden Ansprüche 3 - 6, **dadurch gekennzeichnet, dass** die Hubeinrichtung (5) Haltemittel (5.1) aufweist, die zum zumindest teilweisen seitlichen Umgreifen des Behälters ausgebildet sind.

8. Behälterbehandlungsmaschine nach Anspruch 7, **dadurch gekennzeichnet, dass** die Haltemittel (5.1) durch einen Greifer gebildet werden, der zumindest zwei miteinander zusammenwirkende Greiferelemente aufweist, die derart bewegbar sind, dass der Einlauf eines zu behandelnden Behälters (3) und/oder der Auslauf eines bereits behandelten Behälters (3) behinderungsfrei erfolgt.

9. Behälterbehandlungsmaschine nach einem der vorhergehenden Ansprüche 3 bis 7, **dadurch gekennzeichnet, dass** die Hubeinrichtung (5) als Neckringhalter ausgebildete Haltemittel (5.1) aufweist, die zum teilweisen seitlichen Umgreifen eines Behälters (3) unterhalb des Neckrings ausgebildet sind.

10. Behälterbehandlungsmaschine nach Anspruch 7 oder 9, **dadurch gekennzeichnet, dass** das Transportelement (2) zur getakteten Drehung um einen Winkelbetrag entgegen der Drehrichtung des gleichzeitig gedrehten Transfersterns (4) ausgebildet ist, um ein kollisionsfreies teilweises Umgreifen des Behälters (3) durch die Haltemittel (5.1) zu ermöglichen.

11. Behälterbehandlungsmaschine nach einem der vorhergehenden Ansprüche 3 - 10, **dadurch gekennzeichnet, dass** die Hubeinrichtung (5) oder daran vorgesehene Haltemittel (5.1) in radialer Richtung gegenüber der Maschinenachse (MA1) des Transportelements (2) verfahrbar ausgebildet sind.

12. Behälterbehandlungsmaschine nach einem der vorhergehenden Ansprüche, **dadurch gekennzeichnet, dass** die Zuführung und Abführung der Behälter (3) zu dem Transferstern (4) mittels eines einzigen, unterhalb des Transfersterns (4) verlaufenden Transporteurs (6) erfolgt.

13. Behälterbehandlungsmaschine nach einem der vorhergehenden Ansprüche, **dadurch gekennzeichnet, dass** diese als Füllmaschine, als Reinigungs- und/oder Desinfektionsmaschine oder als Inspektionsmaschine ausgebildet ist.

14. Verfahren zum Zuführen und/oder Abführen von Behältern (3) zu einer Behälterbehandlungsmaschine (1) umfassend ein um eine vertikale Maschinenachse (MA1) umlaufendes Transportelement (2) mit einer Vielzahl von Behandlungsstationen (2a) zum Behandeln von Behältern (3) und einen einzigen Transferstern (4) mit Behälteraufnahmen, mittels dem ein Zuführen der zu behandelnden Behälter (3) und das Abführen der bereits behandelten Behälter (3) erfolgt, umfassend folgende Schritte:
- Zuführen zumindest eines zu behandelnden Behälters (3) zu einer Behälteraufnahme des Transfersterns (4), wobei die Behälteraufnahme durch eine umfangsseitig angeordnete Ausnehmung (4.1) des Transfersterns (4) gebildet wird;
- Transport des zu behandelnden Behälters (3) an eine Übergabeposition (ÜP) und/oder Ausrichten des zu behandelnden Behälters (3) an einer Übergabeposition (ÜP) durch den Transferstern;
- Übergabe des zu behandelnden Behälters (3) an eine Behandlungsstation (2a) des Transportelements (2) durch Anheben des zu behandelnden Behälters (3) von der Übergabeposition (ÜP) in eine Behandlungspostion durch eine am Transportelement (2) vorgesehene Hubeinrichtung (5);
- Drehung des Transportelements (2) zur Positionierung eines bereits behandelten Behälters (3) über einer behälterfreien Behälteraufnahme des Transfersterns (4), wobei das Transportelement (2) und der Transferstern (4) unabhängig voneinander angetrieben werden;
- Übergabe des bereits behandelten Behälters an die behälterfreie Behälteraufnahme des Transfersterns (4); und
- Abtransport des behandelten Behälters (3).

15. Verfahren nach Anspruch 14, **dadurch gekennzeichnet, dass** durch das Anheben die behälterfreie Behälteraufnahme am Transferstern (4) geschaffen wird.

16. Verfahren nach einem der Ansprüche 14-15, **dadurch gekennzeichnet, dass** die Übergabe des bereits behandelten Behälters (3) an die behälterfreie Behälteraufnahme des Transfersterns (4) durch Absenken des bereits behandelten Behälters (3) mittels der ihr zugeordneten Hubeinrichtung (5) in die behälterfreie Behälteraufnahme erfolgt.

17. Verfahren nach einem der Ansprüche 14 - 16, **dadurch gekennzeichnet, dass** das Transportelement (2) und der Transferstern (4) zumindest zweitweise wechselseitig getaktet oder intermittierend angetrieben werden.

18. Verfahren nach einem der Ansprüche 14 - 17, **dadurch gekennzeichnet, dass** das Transportelement (2) und/oder der Transportstern (4) zumindest zeitweise in unterschiedliche Drehrichtungen angetrieben werden.

19. Verfahren nach einem der Ansprüche 15 - 18, **dadurch gekennzeichnet, dass** die Hubeinrichtung (5) Haltemittel (5.1) zum zumindest teilweisen Umgreifen eines Behälters (3) aufweist, wobei diese Haltemittel (5.1) derart verschwenkt und/oder verfahren werden, dass eine Kollision mit einem vom Transferstern geförderten Behälter während des Verdrehens des Transportelements und/oder des Transfersterns vermieden wird.

20. Verfahren nach einem der Ansprüche 15 bis 18, **dadurch gekennzeichnet, dass** zum kollisionsfreien Umgreifen des Behälters (3) durch Haltemittel der Hubeinrichtung (5) beim Zuführen der Behälter (3) zu der Übergabeposition (ÜP) oder zum kollisionsfreien Freigeben des Behälters (3) durch die Haltemittel (5.1) der Hubeinrichtung (5) das Transportelement (2) zumindest zeitweise gleichzeitig mit dem Transferstern (4) rotiert wird, und zwar in unterschiedlichen Drehrichtungen.

21. Verfahren nach einem der Ansprüche 14 bis 20, **dadurch gekennzeichnet, dass** die Behälter (3) mittels eines einzigen, unterhalb des Transfersterns (4) verlaufenden Transporteurs (6) dem Transferstern (4) zugeführt und von diesem Transferstern (4) abgeführt werden.

22. Verfahren nach einem der Ansprüche 14 bis 21, **dadurch gekennzeichnet, dass** die Behälterbehandlungsmaschine eine Füllmaschine ist und die Behälter (3) während der gesamten Dauer oder im Wesentlichen der gesamten Dauer der Volldrehung des Transportelements (2) mit einem Füllgut befüllt werden.

## Claims

1. Container processing machine comprising a conveyor element (2) that turns about a vertical machine axis (MA) and has a plurality of processing stations (2a) for processing containers (3) and a single transfer star wheel (4), by means of which the containers (3) that are to be processed are delivered to the conveyor element (2) and the already processed containers (3) are removed from the conveyor element (2), wherein the transfer star wheel (4) comprises cut-out openings (4.1) arranged on the circumferential side, into which the containers (3) are at least partially accommodated for delivery and removal, **characterised in that** the transfer of the container (3) that is to be processed takes place at a processing station (2a) of the conveyor element (2) by the raising of the container (3) to be treated from a transfer position (ÜP) into a processing position by a lifting device (5) provided at the conveyor element (2), and that the conveyor element (2) and the transfer star wheel (4) are configured such as to be driven independently of one another.

2. Container processing machine according to claim 1, **characterised in that** the delivery and removal of the containers (3) by the transfer star wheel (4) takes place in a first height plane (H1), and the processing of the containers (3) at the processing stations (2a) takes place in a second height plane (H2) located above the first height plane (H1).

3. Container processing machine according to claim 2, **characterised in that** lifting devices (5) are provided at the conveyor element (2), allocated to the processing stations (2a), which are configured for the raising of the containers (3) from the first height plane (H1) into the second height plane (H2) and for lowering the containers (3) from the second height plane (H2) into the first height plane (H1).

4. Container processing machine according to claim 3, **characterised in that** an independent lifting device (5) is allocated in each case to each processing station (2a) of the conveyor element (2).

5. Container processing machine according to any one of the preceding claims, **characterised in that** the conveyor element (2) and the transfer star wheel (4) are configured such as to be at least partially alternately switched in a cyclic manner, or such as to be driven intermittently.

6. Container processing machine according to any one of the preceding claims, **characterised in that** the conveyor element (2) and/or the transfer star wheel (4) are configured such as to be capable of being driven in different directions of rotation.

7. Container processing machine according to any one of the preceding claims 3-6, **characterised in that** the lifting device (5) comprises holding means (5.1) which are configured for the at least partial lateral engagement around the container.

8. Container processing machine according to claim 7, **characterised in that** the holding means (5.1) is formed by a gripper, which comprises at least two mutually interacting gripper elements, which can be moved in such a way that the inlet of a container (3) that is to be processed and/or the outlet of a container (3) which has already been processed takes place free of any hindrance.

9. Container processing machine according to any one of the preceding claims 3 to 7, **characterised in that** the lifting device (5) comprises holding means (5.1), configured as neck ring holders, which are configured for the partial lateral gripping around a container (3) beneath the neck ring.

10. Container processing machine according to claim 7 or 9, **characterised in that** the conveyor element (2) is configured for the cyclic rotation by an angle amount against the rotation direction of the simultaneously rotated transfer star wheel (4), in order to allow for a collision-free partial gripping around the container (3) by the holding means (5.1).

11. Container processing machine according to any one of the preceding claims 3-10, **characterised in that** the lifting device (5), or holding means (5.1) provided on it, are configured such as to be movable in the radial direction opposite the machine axis (MA1) of the conveyor element (2).

12. Container processing machine according to any one of the preceding claims, **characterised in that** the delivery and removal of containers (3) in relation to the transfer star wheel (4) takes place by means of a single conveyor (6) running beneath the transfer star wheel (4).

13. Container processing machine according to any one of the preceding claims, **characterised in that** this is configured as a filling machine, as a cleaning machine, and/or as a disinfection machine or as an inspection machine.

14. Method for delivery and removal of containers (3) in relation to a container processing machine (1), comprising a conveyor element (2) circulating about a vertical machine axis (MA1) with a plurality of processing stations (2a) for the processing of containers (3) and a single transfer star wheel (4) with container receivers, by means of which the delivery of the containers (3) to be processed and the removal of the already processed containers (3) takes place comprising the following steps:
- delivering at least one container (3) to be processed to a container receiver of the transfer star wheel (4), wherein the container receiver is formed by a cut-out opening (4.1) of the transfer star wheel (4), arranged on the circumference side;
- conveying the container (3) to be processed to a transfer position (ÜP) and/or alignment of the container (3) to be processed at a transfer position (UP) by the transfer star wheel;
- transferring the container (3) to be processed to a processing station (2a) of the conveyor element (2) by raising the container (3) to be processed from the transfer position (ÜP) into a processing position, by a lifting device (5) provided at the conveyor element (2);
- rotating the conveyor element (2) for the positioning of an already processed container (3) above a container-free container receiver of the transfer star wheel (4), wherein the conveyor element (2) and the transfer star wheel (4) are driven independently of each other;
- transferring the already processed container to the container-free container receiver of the transfer star wheel (4); and
conveying away of the processed container (3).

15. Method according to claim 14, **characterised in that**, by raising, the container-free container receiver is created at the transfer star wheel (4).

16. Method according to one of claims 14-15, **characterised in that** the transfer of the already processed container (3) to the container-free container receiver of the transfer star wheel (4) takes place by lowering the already processed container (3), by means of the lifting device (5) allocated to it, into the container-free container receiver.

17. Method according to any one of claims 14-16, **characterised in that** the conveyor element (2) and the transfer star wheel (4) are moved cyclically alternating at least intermittently, or are intermittently driven.

18. Method according to any one of claims 14-17, **characterised in that** the conveyor element (2) and/or the transfer star wheel (4) are driven at least intermittently in different rotational directions.

19. Method according to any one of claims 15-18, **characterised in that** the lifting device (5) comprises holding means (5.1) for at least partial gripping around a container (3), wherein the holding means (5.1) are pivoted and/or moved in such a way that a collision is avoided with a container conveyed by the transfer star wheel during the rotation of the conveyor element and/or of the transfer star wheel.

20. Method according to any one of claims 15 to 18, **characterised in that**, for the collision-free gripping of the container (3) by holding means of the lifting device (5) during the delivery of the containers (3) to the transfer position (ÜP), or for the collision-free release of the container (3) by the holding means (5.1) of the lifting device (5), the conveyor element (2) is at least intermittently rotated simultaneously with the transfer star wheel (4), and specifically in different directions of rotation.

21. Method according to any one of claims 14 to 20, **characterised in that** the containers (3) are delivered to the transfer star wheel (4) and conveyed away from this transfer star wheel (4) by means of a single conveyor (6) running beneath the transfer star wheel (4).

22. Method according to any one of claims 14 to 21, **characterised in that** the container processing machine is a filling machine, and the containers (3) are filled with a filling product during the entire duration or essentially the entire duration of the full rotation of the conveyor element (2).

## Revendications

1. Machine de traitement de contenant comprenant un élément de transport (2) tournant autour d'un axe de machine vertical (MA1) avec une pluralité de stations de traitement (2a) pour le traitement de contenants (3) et une seule étoile de transfert (4), au moyen de laquelle une amenée des contenants (3) à traiter à l'élément de transport (2) et l'évacuation des contenants (3) déjà traités de l'élément de transport (2) a lieu, dans laquelle l'étoile de transfert (4) présente des évidements (4.1) agencés côté périphérique, dans lesquels les contenants (3) sont reçus au moins en partie pour l'amenée et l'évacuation, **caractérisée en ce que** le transfert du contenant (3) à traiter à une station de traitement (2a) de l'élément de transport (2) se fait par soulèvement du contenant (3) à traiter d'une position de transfert (ÜP) à une position de traitement par un dispositif de levage (5) prévu au niveau de l'élément de transport (2),
et **en ce que** l'élément de transport (2) et l'étoile de transfert (4) sont réalisés de manière à pouvoir être entraînés indépendamment l'un de l'autre.

2. Machine de traitement de contenant selon la revendication 1, **caractérisée en ce que** l'amenée ou l'évacuation des contenants (3) se fait par l'étoile de transfert (4) à une première hauteur (H1) et le traitement des contenants (3) au niveau des stations de traitement (2a) se fait à une deuxième hauteur (H2) située au-dessus de la première hauteur (H1).

3. Machine de traitement de contenant selon la revendication 2, **caractérisée en ce que** des dispositifs de levage (5) attribués aux stations de traitement (2a), qui sont réalisés pour le soulèvement des contenants (3) de la première hauteur (H1) à la deuxième hauteur (H2) et pour l'abaissement des contenants (3) de la deuxième hauteur (H2) à la première hauteur (H1), sont prévus au niveau de l'élément de transport (2).

4. Machine de traitement de contenant selon la revendication 3, **caractérisée en ce que** respectivement un dispositif de levage (5) autonome est attribué à chaque station de traitement (2a) de l'élément de transport (2).

5. Machine de traitement de contenant selon l'une quelconque des revendications précédentes, **caractérisée en ce que** l'élément de transport (2) et l'étoile de transfert (4) sont réalisés de manière à pouvoir être entraînés au moins en partie de manière réciproquement cadencée ou de manière intermittente.

6. Machine de traitement de contenant selon l'une quelconque des revendications précédentes, **caractérisée en ce que** l'élément de transport (2) et/ou l'étoile de transfert (4) est/sont réalisé(e)s de manière à pouvoir être entraînés dans des directions de rotation différentes.

7. Machine de traitement de contenant selon l'une quelconque des revendications précédentes 3-6, **caractérisée en ce que** le dispositif de levage (5) présente des moyens de retenue (5.1), qui sont réalisés pour enserrer latéralement au moins en partie le contenant.

8. Machine de traitement de contenant selon la revendication 7, **caractérisée en ce que** les moyens de retenue (5.1) sont formés par un préhenseur, qui présente au moins deux éléments de préhension coopérant l'un avec l'autre, qui sont mobiles de telle manière que l'entrée d'un contenant (3) à traiter et/ou la sortie d'un contenant (3) déjà traité se fait sans obstacle.

9. Machine de traitement de contenant selon l'une quelconque des revendications précédentes 3 à 7,
**caractérisée en ce que** le dispositif de levage (5) présente des moyens de retenue (5.1) réalisés en tant que support de bague de col, qui sont réalisés pour enserrer latéralement en partie un contenant (3) sous la bague de col.

10. Machine de traitement de contenant selon la revendication 7 ou 9, **caractérisée en ce que** l'élément de transport (2) est réalisé pour la rotation cadencée d'un angle dans le sens contraire au sens de rotation de l'étoile de transfert (4) tournant en même temps pour permettre aux moyens de retenue (5.1) d'enserrer en partie le contenant (3) sans collision.

11. Machine de traitement de contenant selon l'une quelconque des revendications précédentes 3 - 10, **caractérisée en ce que** le dispositif de levage (5) ou les moyens de retenue (5.1) prévus sur celui-ci sont réalisés de manière déplaçable dans une direction radiale par rapport à l'axe de machine (MA1) de l'élément de transport (2).

12. Machine de traitement de contenant selon l'une quelconque des revendications précédentes, **caractérisée en ce que** l'amenée et l'évacuation des contenants (3) à l'étoile de transfert (4) se fait au moyen d'un seul transporteur (6) s'étendant sous l'étoile de transfert (4).

13. Machine de traitement de contenant selon l'une quelconque des revendications précédentes, **caractérisée en ce que** celle-ci est réalisée en tant que machine de remplissage, en tant que machine de nettoyage et/ou machine de désinfection ou en tant que machine d'inspection.

14. Procédé d'amenée et/ou d'évacuation de contenants (3) à une machine de traitement de contenant (1) comprenant un élément de transport (2) tournant autour d'un axe de machine vertical (MA1) avec une pluralité de stations de traitement (2a) pour le traitement de contenants (3) et une seule étoile de transfert (4) avec des logements de contenant, au moyen de laquelle une amenée des contenants (3) à traiter et l'évacuation des contenants (3) déjà traités a lieu, comprenant les étapes suivantes :
- amenée d'au moins un contenant (3) à traiter à un logement de contenant de l'étoile de transfert (4), dans lequel le logement de contenant est formé par un évidement (4.1) agencé côté périphérique de l'étoile de transfert (4) ;
- transport du contenant (3) à traiter à une position de transfert (ÜP) et/ou orientation du contenant (3) à traiter au niveau d'une position de transfert (ÜP) par l'étoile de transfert ;
- transfert du contenant (3) à traiter à une station de traitement (2a) de l'élément de transport (2) par soulèvement du contenant (3) à traiter de la position de transfert (ÜP) à une position de traitement par un dispositif de levage (5) prévu au niveau de l'élément de transport (2) ;
- rotation de l'élément de transport (2) pour le positionnement d'un contenant (3) déjà traité au-dessus d'un logement de contenant sans contenant de l'étoile de transfert (4), dans lequel l'élément de transport (2) et l'étoile de transfert (4) sont entraînés indépendamment l'un de l'autre ;
- transfert du contenant déjà traité au logement de contenant sans contenant de l'étoile de transfert (4) ; et
- évacuation du contenant (3) traité.

15. Procédé selon la revendication 14, **caractérisé en ce**
**que** par le soulèvement, le logement de contenant sans contenant est créé au niveau de l'étoile de transfert (4).

16. Procédé selon l'une quelconque des revendications 14 - 15, **caractérisé en ce que** le transfert du contenant (3) déjà traité au logement de contenant sans contenant de l'étoile de transfert (4) se fait par abaissement du contenant (3) déjà traité au moyen du dispositif de levage (5) qui lui est attribué dans le logement de contenant sans contenant.

17. Procédé selon l'une quelconque des revendications 14 - 16, **caractérisé en ce que** l'élément de transport (2) et l'étoile de transfert (4) sont entraînés au moins temporairement de manière réciproquement cadencée ou de manière intermittente.

18. Procédé selon l'une quelconque des revendications 14 - 17, **caractérisé en ce que** l'élément de transport (2) et/ou l'étoile de transport (4) sont entraînés au moins temporairement dans différentes directions de rotation.

19. Procédé selon l'une quelconque des revendications 15 - 18, **caractérisé en ce que** le dispositif de levage (5) présente des moyens de retenue (5.1) pour enserrer au moins en partie un contenant (3), dans lequel ces moyens de retenue (5.1) sont pivotés et/ou déplacés de telle manière qu'une collision avec un contenant transporté par l'étoile de transfert est évitée pendant la rotation de l'élément de transport et/ou de l'étoile de transfert.

20. Procédé selon l'une quelconque des revendications 15 à 18, **caractérisé en ce que** pour enserrer le contenant (3) sans collision par des moyens de retenue du dispositif de levage (5) lors de l'amenée des contenants (3) à la position de transfert (ÜP) ou pour la libération sans collision du contenant (3) par les moyens de retenue (5.1) du dispositif de levage (5), l'élément de transport (2) est tourné au moins temporairement en même temps que l'étoile de transfert (4), et ce dans différentes directions de rotation.

21. Procédé selon l'une quelconque des revendications 14 à 20, **caractérisé en ce que** les contenants (3) sont amenés à l'étoile de transfert (4) et évacués de cette étoile de transfert (4) au moyen d'un seul transporteur (6) s'étendant sous l'étoile de transfert (4).

22. Procédé selon l'une quelconque des revendications 14 à 21, **caractérisé en ce que** la machine de traitement de contenant est une machine de remplissage et les contenants (3) sont remplis d'un produit de remplissage pendant toute la durée ou sensiblement pendant toute la durée de la rotation complète de l'élément de transport (2).
